# EUROPÄISCHE PATENTSCHRIFT

(11) **EP 1 155 923 B1**
(45) Veröffentlichungstag und Bekanntmachung des Hinweises auf die Patenterteilung: **17.09.2008**
(21) Anmeldenummer: 01110651.5
(22) Anmeldetag: 02.05.2001
(51) Int. Cl.: B60R 21/06

(54) **Kraftfahrzeug mit Rückhaltevorrichtung für den Laderaum wie z.B. Kombinationskraftwagen**
Vehicle with retaining device for the luggage compartment , e.g. a station wagon
Véhicule avec dispositif de retenue pour le compartiment bagages, par exemple un break

(30) Priorität: 16.05.2000 DE 10023706
(43) Veröffentlichungstag der Anmeldung: 21.11.2001
(73) Patentinhaber: BOS GmbH & Co. KG, 73760 Ostfildern (DE)
(72) Erfinder: Butz, Peter, 20149 Hamburg (DE); Sitzler, Wolfgang, 42111 Wuppertal (DE)
(74) Vertreter: Patentanwälte Ruff, Wilhelm, Beier, Dauster & Partner

(56) Entgegenhaltungen:
- EP-A- 0 970 850
- WO-A-91/12155
- DE-A- 4 128 555
- FR-A- 2 741 019
- GB-A- 2 321 436
- US-A- 5 876 064

## Beschreibung

Die Erfindung betrifft ein Kraftfahrzeug mit einer Rückhaltevorrichtung für dessen Laderaum insbesondere einen Kombinationskraftwagen, entsprechend dem Oberbegriff des Anspruchs 1. Eine solches Kraftfahrzeug mit einer Rückhaltevorrichtung ist durch die EP 0 515 481 B1 bekanntgeworden.

Bei der bekannten Rückhaltevorrichtung (EP 0 515 481 B1) ist entsprechend der jeweiligen Breite zweier einzelner Sitzlehnen oben an deren Rückseiten jeweils ein mit der Sitzlehne weitestgehend integriertes Rollogehäuse vorgesehen.

Jedes Rollogehäuse enthält eine Wickelwelle mit einem eigenen Federmotor, gegen dessen Rückstellmoment jeweils eine Netzbahn von der Wickelwelle abgezogen bzw. abgerollt werden kann.

Eine der beiden Netzbahnen trägt an ihrem oberen freien Querrand einen teleskopierbaren Haltestab, welcher sich über die gesamte lichte Weite des Fahrzeuginnenraums erstreckt und welcher mit seinen beiden etwa bundartigen Riegelenden jeweils fahrzeugseitig in schlüssellochartigen Beschlägen, die z.B. an den C-Säulen angebracht sein können, eingerastet werden kann. Eine der beiden Netzbahnen trägt an ihrem freien Querrand ein etwa hakenförmig profiliertes Formteil, welches auf den unbesetzten Axialbereich der teleskopierbaren Haltestange für den Fall aufgerastet werden kann, dass beide Netzbahnen in ihre aufgespannte Betriebsstellung versetzt werden sollen.

Vorteilhaft ist die durch die EP 0 515 481 B1 bekannte Rückhaltevorrichtung insofern, als diese das Umklappen einer Sitzlehne oder das Entfernen des betreffenden - allerdings nur einen - Sitzes (z.B. mit Einzelsitzfläche oder Doppelsitzfläche) gestattet, ohne dass dadurch die Sperrfunktion der Rückhaltevorrichtung im Bereich der anderen Sitzlehne beeinträchtigt wird.

Aus der FR 2 741 019 ist eine Rückhaltevorrichtung bekannt, bei der ein elastisches und flexibles Trennnetz in eine doch feste und in eine fahrzeugsitzfeste Stange eingehakt werden kann, um einen Passagierraum des damit verbundenen Kraftfahrzeugs von einem Laderaum abzutrennen.

Ausgehend von der durch die EP 0 515 481 B1 her bekannten Rückhaltevorrichtung, liegt der Erfindung die Aufgabe zugrunde, eine Rückhaltevorrichtung zu schaffen, welche universeller als bisher eingesetzt werden kann.

In Verbindung mit den Merkmalen des Oberbegriffs des Anspruchs 1 wird diese Aufgabe entsprechend der Erfindung durch die Merkmale des kennzeichnenden Teils gelöst.

Im Unterschied zum Gegenstand der EP 0 515 481 B1 ist die Haltestange nicht etwa an einer bestimmten Werkstoffbahn nur einer klappbaren Sitzlehne befestigt, sondern entsprechend der Erfindung bildet die Haltestange zwar ein an oder benachbart der Dachinnenfläche angeordnetes, jedoch mit keiner der Werkstoffbahnen fest verbundenes Bauteil. Die Erfindung gestattet es dem Benutzer, jede beliebige Werkstoffbahn gesondert von irgendeiner anderen Werkstoffbahn oder aber sämtliche Werkstoffbahnen gemeinsam an der Haltestange lösbar zu befestigen.

Hinzu kommt, dass jede Werkstoffbahn in unterschiedlichen Ausziehlängen gegen ein zusätzliches Ausziehen festlegbar ist. In ihrer Betriebsposition ist demnach jede Werkstoffbahn gegen ein weiteres Ausziehen bzw. Abrollen von der Wickelwelle gesichert, und zwar unabhängig davon, ob die Wickelwelle beispielsweise an einer heruntergeklappten Sitzlehne, an irgendeiner Stelle des Sitzbereichs, also beispielsweise im Bodenbereich des Sitzes, oder an einer aufrechten Sitzlehne befestigt ist. Die Sicherung gegen ein weiteres Ausziehen kann zweckmäßig und beispielsweise dadurch realisiert werden, dass die Wickelwelle ein Drehrichtgesperre enthält, wie es in der DE 27 49 560 A1 beschrieben ist.

In weiterer Ausgestaltung der Erfindung weist jeder freie Querrand mindestens ein Halteelement auf, welches an der Haltestange lösbar zu befestigen ist.

So können beispielsweise die Halteelemente an den freien Querrändern hakenförmige Fortsätze bilden, welche an oder in der Haltestange lösbar einzuhängen sind.

Um unterschiedliche Positionen der die Wickelwelle tragenden Aufnahmehalterungen im Sitzbereich zu berücksichtigen, beispielsweise nach Umklappen einer eine Aufnahmehalterung tragenden Sitzlehne von ihrer aufrechten in ihre herabgeschwenkte Position, ist gemäß der Erfindung vorgesehen dass an der Dachinnenfläche oder benachbart der Dachinnenfläche eines Kraftfahrzeugs eine Anzahl von fahrzeugseitigen Halterungen vorhanden ist, welche eine versetzte Haltestangen-Befestigung gestatten.

In weiterer Ausgestaltung der Erfindung sind die fahrzeugseitigen Halterungen etwa dem durch das Umklappen der jeweiligen Sitzlehne von einer aufrechten in eine herabgeschwenkte Position bedingten Versatz ebenfalls versetzt angeordnet.

Die fahrzeugseitigen Halterungen gestatten eine lösbare Haltestangen-Befestigung, derart, dass z.B. sämtliche Haltestangen bei Bedarf eingesetzt oder entnommen werden können. Andererseits sieht die Erfindung vor, dass den fahrzeugseitigen Halterungen nur eine lösbare Haltestange alternativ versetzbar zugeordnet ist.

Grundsätzlich lässt es die Erfindung auch zu, mehrere Haltestangen in den fahrzeugseitigen Halterungen fest anzuordnen.

Eine besonders vorteilhafte Ausführungsform der Erfindung besteht darin, dass die Haltestange die Dachinnenfläche mit mindestens einem Axialbereich mit Höhenabstand untergreift. Eine derartige Ausführungsform kann ähnlich einer Dachreling, allerdings hängend, ausgeführt sein. Dabei kann eine solche Haltestange selbstverständlich fest oder lösbar sowie alternativ versetzbar in den fahrzeugseitigen Halterungen aufgenommen sein.

Eine andere erfindungsgemäße Ausführungsform besteht darin, dass die Haltestange im wesentlichen auf ihrer gesamten axialen Länge an der Dachinnenfläche abgestützt ist. Bei einer solchen Ausführungsform sind die Halteelemente der freien äußeren Querränder z.B. steckriegelartig und die haltestangenseitigen Gegen-Halteelemente stecklochartig ausgebildet. Den haltestangenseitigen Gegen-Halteelementen sind zweckmäßig Verriegelungsmittel zugeordnet. Schließlich sieht die Erfindung vor, die Haltestange als im wesentlichen einstückiges Bauteil auszubilden oder so zu konzipieren, dass die Haltestange ein aus mehreren Axialabschnitten zusammengesetztes Bauteil darstellt.

In den Zeichnungen sind bevorzugte Ausführungsbeispiele entsprechend der Erfindung in mehr schematischer Weise dargestellt, es zeigt
Fig. 1 den Innen- bzw. Laderaum eines Kombinationskraftwagens in räumlicher Darstellung;
Fig. 2 und 3 im Vergleich zu Fig. 1 etwa analoge Seitenansichten, die man sich entsprechend der in Fig. 1 mit II/III bezeichneten Blickrichtung vorstellen kann;
Fig. 4 eine räumliche Teildarstellung einer Ausführungsform mit herabgeschwenkter Sitzlehne eines Einzelsitzes und
Fig. 5 die Anordnung gemäß Fig. 4 bei aufrechter Position des Einzelsitzes.

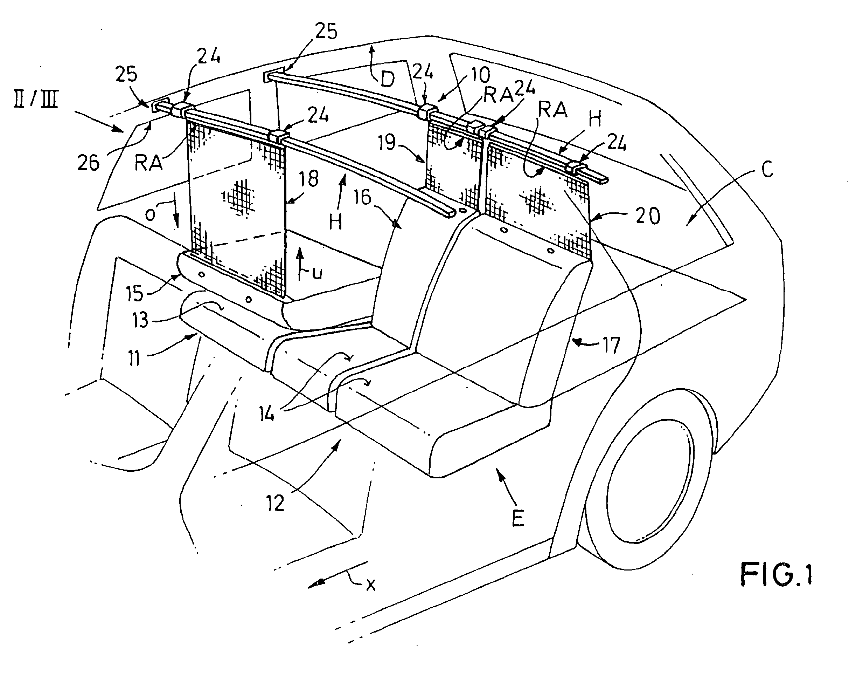

In den Zeichnungen ist unabhängig von ihrer speziellen Ausgestaltung jede Rückhaltevorrichtung insgesamt mit 10 bezeichnet. Gemäß Fig. 1 sind in einem Sitzeinbaubereich E zwei Einzelsitze 11, 12 angeordnet. Der Einzelsitz 11 weist eine Einzelsitzfläche 13 und der Einzelsitz 12 eine Doppelsitzfläche 14 auf.

Der Einzelsitz 11 weist eine klappbare Sitzlehne 15 und der Einzelsitz 12 zwei klappbare Sitzlehnen 16, 17 auf. Der Laderaum ist mit C bezeichnet.

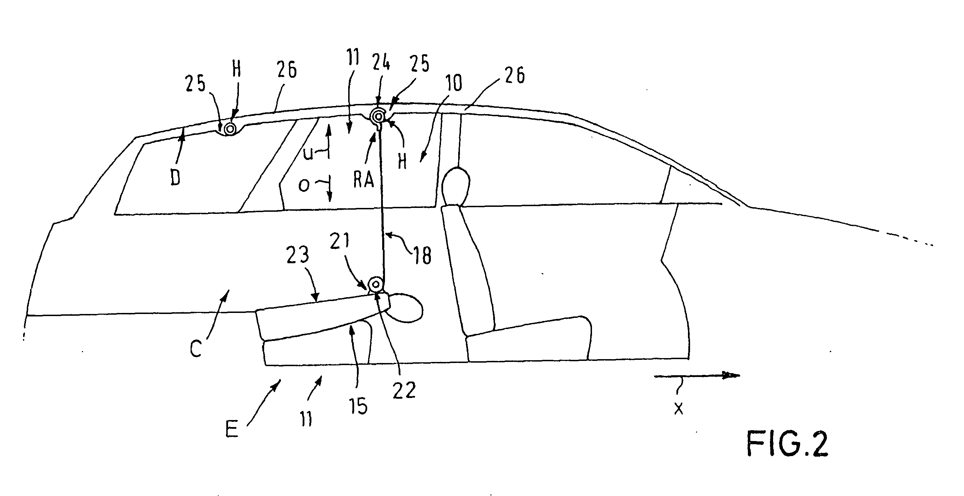

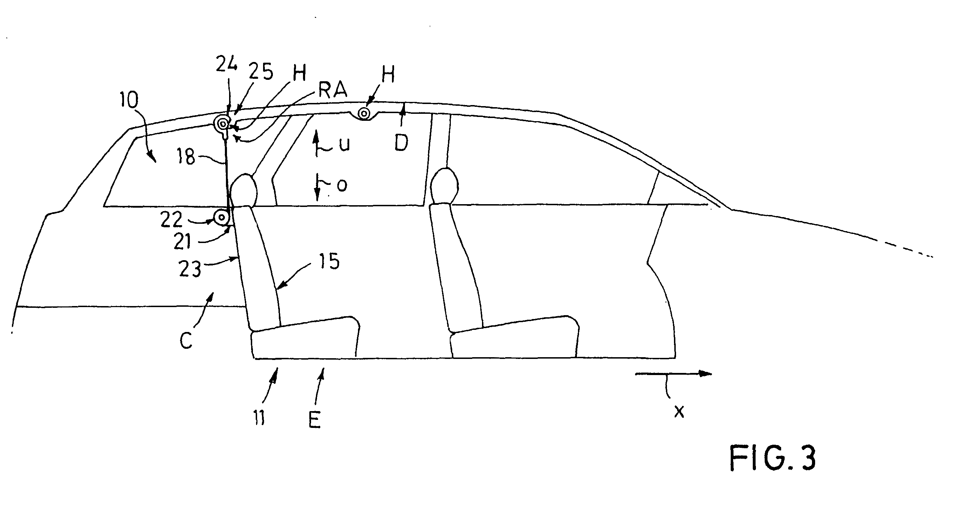

Jeder Sitzlehne 15, 16, 17 ist eine Aufnahmehalterung mit einer Wickelwelle zur Aufnahme je einer als Netzbahn ausgebildeten Werkstoffbahn 18, 19, 20 zugeordnet. Die Aufnahmehalterungen gemäß den Fig. 1, 4 und 5 sind nicht sichtbar, da sie mit den jeweiligen Sitzlehnen integriert sind. Indessen ist eine Aufnahmehalterung 21 mit einer Wickelwelle 22 an der rückwärtigen Lehnenfläche 23 im Zusammenhang mit der dort gezeigten Sitzlehne 15 in den Fig. 2 und 3 schematisch angedeutet.

Jede Werkstoffbahn 18, 19, 20 weist einen äußeren freien Querrand RA auf. Die nicht gezeigten inneren freien Querränder der Werkstoffbahnen 18, 19, 20 sind jeweils an einer Wickelwelle 22 gehalten.

Die freien Querränder RA tragen jeweils hakenartige Fortsätze 24, welche gemäß den Fig. 1 bis 3 eine Haltestange H lösbar verhakend übergreifen. Die in Fig. 1 gezeigten beiden Haltestangen H sind in Halterungen 25, die in den oberen Längsholmen 26 vorgesehen sind, lösbar gehalten. Von den Längsholmen ist in Fig. 1 nur ein Längsholm 26 dargestellt, folglich sind auch nur zwei Halterungen 25 in Fig. 1 eingetragen.

Anhand von Fig. 1 ist vorstellbar, dass, abweichend von der gezeigten Betriebsstellung, sämtliche Haken 24 aller Werkstoffbahnen 18, 19, 20 mit der hinteren Haltestange H verhakt sein können, wenn sich auch die Sitzlehne 15 in ihrer aufrechten Position befindet. Gleichermaßen ist vorstellbar, dass, wenn auch die Sitzlehnen 16, 17 herabgeschwenkt sind, die den Werkstoffbahnen 19, 20 zugeordneten Haken 24 mit der vorderen Haltestange H verhakt sind.

Anhand von Fig. 1 ist auch vorstellbar, dass für die Befestigung der Werkstoffbahnen 18, 19, 20 nur eine Haltestange H für den Fall genügt, dass sämtliche Sitzlehnen 15, 16, 17 entweder herabgeschwenkt sind oder sich in ihrer aufrechten Position befinden. Bei herabgeschwenkten Sitzlehnen 15, 16, 17 würde sich sodann die Haltestange H in den vorderen Halterungen 25 und bei aufrechten Sitzlehnen 15, 16, 17 in den hinteren Halterungen 25 befinden.

Ebenso wie aus Fig. 1 ist auch aus den Fig. 2 und 3 zu ersehen, dass die Haltestangen H etwa nach Art einer nach innen herabhängenden Dachreling ausgebildet und angeordnet sind. Dabei überbrücken die Haltestangen H die lichte Weite zwischen den beiden im Querabstand voneinander angeordneten Längsholmen 26 unterhalb im Abstand von der in Fig. 1 mit D angedeuteten Dachinnenfläche.

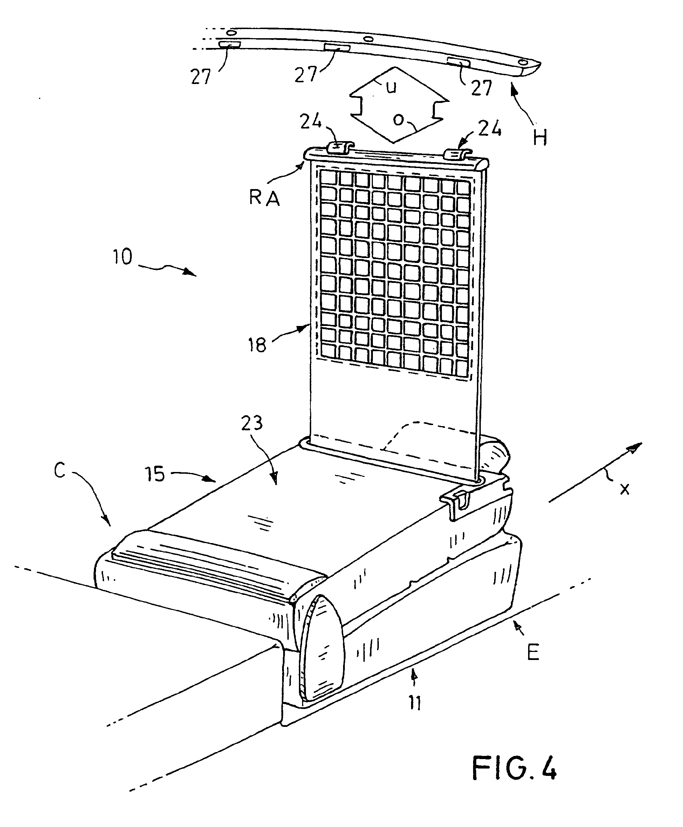

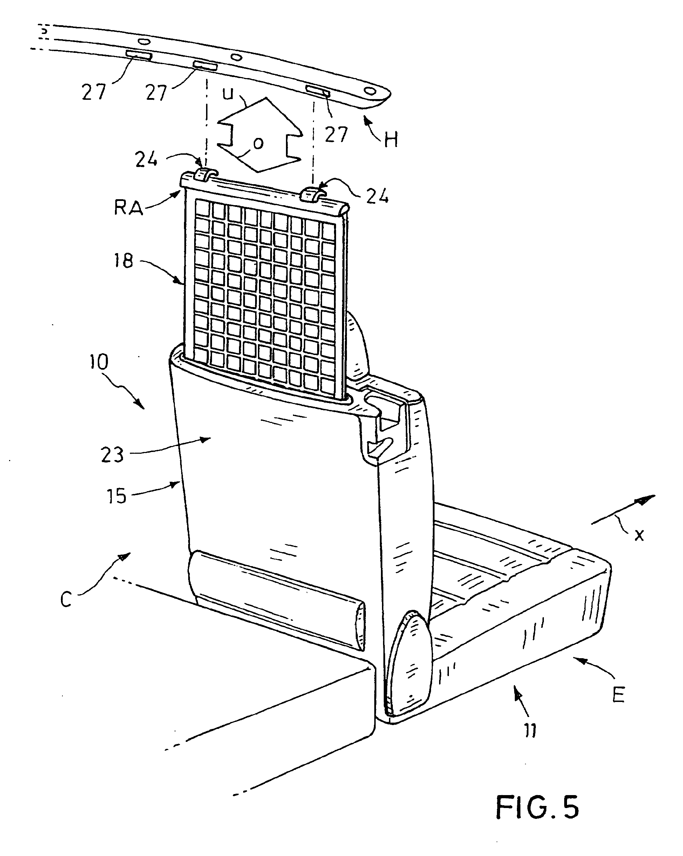

Im Unterschied dazu sind die Haltestangen H in den Fig. 4 und 5 als Anbauteile ausgebildet, welche unmittelbar an der Dachinnenfläche D, d.h. an den dort vorhandenen tragenden Teilen, befestigt, wie z.B. verschraubt sind. Zum Einhaken der Riegel 24 weisen die vorderen und hinteren Haltestangen H gemäß den Fig. 4 und 5 Riegellöcher 27 zur Aufnahme der hakenartigen Fortsätze 24 auf.

Die Aufrollrichtung ist in den Zeichnungen mit u und die Ausziehrichtung mit o bezeichnet. Der die Fahrtrichtung andeutende Pfeil trägt das Bezugszeichen x.

Die Werkstoffbahnen 18, 19, 20 lassen sich in jeder Auszugsstellung, also z.B. bei herabgeschwenkter oder aufrechter Sitzlehne 15, 16, 17, gegen ein weiteres Ausziehen blockieren. Dies kann z.B. gemäß der in der DE 27 49 560 A1 beschriebenen Art geschehen.

## Patentansprüche

1. Kraftfahrzeug mit einer Rückhaltevorrichtung für dessen Laderaum (C), insbesondere Kombinationskraftwagen, mit mindestens einer länglichen Aufnahmehalterung (21), insbesondere einem Rollogehäuse, aus welcher jeweils eine mit ihrem inneren Querrand an einer Wickelwelle (22), die in der Aufnahmehalterung (21) angeordnet ist, gehaltene Werkstoffbahn (18, 19, 20), insbesondere eine Netzbahn, mit ihrem freien äußeren Querrand (RA) von der Wickelwelle (22) entgegen einem Rückstellmoment ausziehbar ist, wobei die Aufnahmehalterung (21) jeweils einem Sitz-Einbaubereich (E) für einen, mit einer klappbaren Sitzlehne (15, 16, 17) versehenen Kraftfahrzeugsitz (11, 12) zugeordnet ist, die Werkstoffbahn (18, 19, 20) zu einer Dachinnenfläche (D) des Kraftfahrzeugs hin ausziehbar und dort mittels mindestens einer an oder benachbart der Dachinnenfläche (D) angeordneten Haltestange (H) lösbar zu befestigen ist, und die Haltestange (H) lösbar in fahrzeugseitigen Halterungen (25) festgelegt ist, **dadurch gekennzeichnet, daß** die Haltestange (H) ein von jeder Werkstoffbahn (18, 19, 20) trennbares Bauteil bildet und alle freien äusseren Querränder (RA) der Werkstoffbahnen (18, 19, 20) unabhängig von jedem äusseren Querrand (RA) einer anderen Werkstoffbahn (18, 19, 20) lösbar an der Haltestange (H) zu befestigen sind und daß die Rückhaltevorrichtung so ausgestaltet ist, daß jede Werkstoffbahn (18, 19, 20) in unterschiedlichen Ausziehlängen, unabhängig von der heruntergeklappten oder aufrechten Sitzlehnenstellung, gegen ein zusätzliches Ausziehen festlegbar ist.

2. Kraftfahrzeug mit einer Rückhaltevorrichtung nach Anspruch 1, **dadurch gekennzeichnet, dass** jeder freie Querrand (RA) mindestens ein Halteelement (24) aufweist, welches an der Haltestange (H) lösbar zu befestigen ist.

3. Kraftfahrzeug mit einer Rückhaltevorrichtung nach Anspruch 2, **dadurch gekennzeichnet, dass** die Halteelemente (24) an den freien Querrändern (RA) hakenförmige Fortsätze bilden, welche an oder in der Haltestange (H) lösbar einzuhängen sind.

4. Kraftfahrzeug mit einer Rückhaltevorrichtung nach einem der Ansprüche 1 bis 3, **dadurch gekennzeichnet, dass** an der Dachinnenfläche (D) oder benachbart der Dachinnenfläche (D) eine Anzahl von fahrzeugseitigen Halterungen (25) vorhanden ist, welche eine versetzte Haltestangen-Befestigung gestatten.

5. Kraftfahrzeug nach Anspruch 4, **dadurch gekennzeichnet, dass** die fahrzeugseitigen Halterungen (25) etwa entsprechend dem durch das Umklappen der jeweiligen Sitzlehne (15, 16, 17) von einer aufrechten in eine herabgeschwenkte Position bedingten Versatz ebenfalls versetzt angeordnet sind.

6. Kraftfahrzeug nach Anspruch 4, **dadurch gekennzeichnet, dass** die fahrzeugseitigen Halterungen (25) eine lösbare Haltestangen-Befestigung gestatten.

7. Kraftfahrzeug nach Anspruch 6, **dadurch gekennzeichnet, dass** den fahrzeugseitigen Halterungen (25) eine lösbare Haltestange (H) alternativ versetzbar zugeordnet ist.

8. Kraftfahrzeug nach einem der Ansprüche 4 bis 6, **dadurch gekennzeichnet, dass** den fahrzeugseitigen Halterungen (25) mehrere Haltestangen (H) zugeordnet sind.

9. Kraftfahrzeug nach einem der Ansprüche 4 bis 8, **dadurch gekennzeichnet, dass** die Haltestange (H) die Dachinnenfläche (D) über mindestens einen Axialbereich mit Höhenabstand untergreift.

10. Kraftfahrzeug nach einem der Ansprüche 4 bis 8, **dadurch gekennzeichnet, dass** die Haltestange (H) im wesentlichen auf ihrer gesamten axialen Länge an der Dachinnenfläche (D) abgestützt ist.,

11. Kraftfahrzeug mit einer Rückhaltevorrichtung nach einem der Ansprüche 1 bis 3, **dadurch gekennzeichnet, dass** die Haltestange (H) ein im wesentlichen einstückiges Bauteil ist.

12. Kraftfahrzeug mit einer Rückhaltevorrichtung nach einem der Ansprüche 1 bis 3, **dadurch gekennzeichnet, dass** die Haltestange (H) ein aus mehreren Axialabschnitten zusammengesetztes Bauteil ist.

## Claims

1. Vehicle with a retaining device for the luggage compartment (C) thereof, in particular a station wagon, with at least one elongated receiving holder (21), in particular a roller blind housing, from which a fabric web (18, 19, 29), in particular a net web, held by its inner transverse edge on a winding shaft (22) arranged inside the receiving holder, can be pulled out by its free outer transverse edge (RA) off the winding shaft (22) against a retracting moment, where the receiving holder (21) is assigned to a seat installation area (E) for a vehicle seat (11, 12) provided with a folding seat backrest (15, 16, 17), the fabric web (18, 19, 20) can be pulled out towards an inner roof surface (D) of the vehicle and must be detachably fastened there by means of at least one holding rod (H) arranged on or adjacent to the inner roof surface (D), and the holding rod (H) is detachably fixed in vehicle-mounted holders (25), **characterized in that** the holding rod (H) forms a component separable from each fabric web (18, 19, 20) and all free outer transverse edges (RA) of the fabric webs (18, 19, 20) must be detachably fastened to the holding rod (H) regardless of each outer transverse edge (RA) of another fabric web (18, 19, 20), and **in that** the retaining device is designed such that each fabric web (18, 19, 20) is fixable against further pulling out in different pull-out lengths, regardless of whether the seat backrest is folded down or in the upright position.

2. Vehicle with a retaining device according to Claim 1, **characterized in that** each free transverse edge (RA) has at least one holding element (24) that must be detachably fastened to the holding rod (H).

3. Vehicle with a retaining device according to Claim 2, **characterized in that** the holding elements (24) form at the free transverse edges (RA) hook-like projections which must be detachably suspended on or in the holding rod (H).

4. Vehicle with a retaining device according to one of Claims 1 to 3, **characterized in that** on the inner roof surface (D) or adjacent to the inner roof surface (D) a number of vehicle-mounted holders (25) are provided that permit offset fastening of the holding rods.

5. Vehicle with a retaining device according to Claim 4, **characterized in that** the vehicle-mounted holders (25) are also arranged offset to correspond to the offset caused by the folding down of the respective seat backrest (15, 16, 17) from a vertical to a swung-down position.

6. Vehicle with a retaining device device according to Claim 4, **characterized in that** the vehicle-mounted holders (25) permit detachable fastening of the holding rods.

7. Vehicle with a retaining device according to Claim 6, **characterized in that** a detachable holding rod (H) is assigned alternatively offsettable to the vehicle-mounted holders (25).

8. Vehicle with a retaining device according to one of Claims 4 to 6, **characterized in that** several holding rods (H) are assigned to the vehicle-mounted holders (25).

9. Vehicle with a retaining device according to one of Claims 4 to 8, **characterized in that** the holding rod (H) grips underneath the inner roof surface (D) over at least one axial area with a height clearance.

10. Vehicle with a retaining device according to one of Claims 4 to 8, **characterized in that** the holding rod (H) is supported substantially over its entire axial length on the inner roof surface (D).

11. Vehicle with a retaining device according to one of Claims 1 to 3, **characterized in that** the holding rod (H) is a substantially one-piece component.

12. Vehicle with a retaining device according to one of Claims 1 to 3, **characterized in that** the holding rod (H) is a component made up of several axial sections.

## Revendications

1. Véhicule avec un dispositif de retenue pour son compartiment à bagages (C), en particulier véhicule de type break, avec au moins un support de logement (21) oblong, en particulier un boîtier pour store, duquel respectivement une bande de matériau (18, 19, 20), en particulier un filet, fixée par son bord transversal intérieur à un arbre d'enroulement (22) disposé dans le boîtier de logement (21), peut être tirée par son bord transversal extérieur libre (RA) contre l'effort de rappel à partir de l'arbre d'enroulement (22), sachant que le support de logement (21) est utilisé respectivement dans une zone de montage de la banquette (E) pour un siège de véhicule (11, 12) équipé d'un dossier rabattable (15, 16, 17), que la bande de matériau (18, 19, 20) est déroulable en direction du plafond du véhicule (D) et y est accrochée de manière amovible à l'aide d'au moins une barre de fixation (H) disposée sur le plafond ou à proximité du plafond et que la barre de fixation (H) est fixée elle-même de manière amovible dans des supports (25) se trouvant sur les côtés du véhicule, **caractérisé en ce que** la barre de fixation (H) forme un élément séparable de chaque bande de matériau (18, 19, 20), que tous les bords transversaux extérieurs libres (RA) des bandes de matériau (18, 19, 20) peuvent être fixés de manière amovible à la barre de fixation (H) indépendamment de tout bord transversal extérieur (RA) d'une autre bande de matériau (18, 19, 20), et que le dispositif de retenue est conçu de telle manière que chaque bande de matériau (18, 19, 20) peut être accrochée à des longueurs différentes en déroulant plus de bande, indépendamment de la position rabattue ou droite du dossier du siège.

2. Véhicule avec un dispositif de retenue selon la revendication 1, **caractérisé en ce que** chaque bord transversal libre (RA) présente au moins un élément de fixation (24) qui s'accroche de manière amovible à la barre de fixation (H).

3. Véhicule avec un dispositif de retenue selon la revendication 2, **caractérisé en ce que** les éléments de fixation (24) forment, sur les bords transversaux libres (RA), des prolongements en forme de crochet, lesquels s'accrochent de manière amovible dans ou sur la barre de fixation (H).

4. Véhicule avec un dispositif de retenue selon l'une des revendications1 à 3, **caractérisé en ce que**, sur le plafond (D) ou à proximité du plafond (D), sont disponibles plusieurs supports latéraux (25) permettant une mise en place des barres de fixation dans différentes positions.

5. Véhicule selon la revendication 4, **caractérisé en ce que** les supports latéraux (25) sont disposés à une distance correspondant approximativement au déplacement du dossier de siège (15, 16, 17) entre la position droite et la position rabattue.

6. Véhicule selon la revendication 4, **caractérisé en ce que** les supports latéraux (25) permettent une fixation amovible des barres de fixation.

7. Véhicule selon la revendication 6, **caractérisé en ce qu'**une barre de fixation amovible (H) vient se loger dans les supports latéraux (25) dans une position ou dans l'autre.

8. Véhicule selon l'une des revendications 4 à 6, **caractérisé en ce que** plusieurs barres de fixation amovible (H) viennent se loger dans les supports latéraux (25).

9. Véhicule selon l'une des revendications précédentes 4 à 8, **caractérisé en ce que** la barre de fixation (H) vient se positionner à distance verticale au-dessous du plafond (D) sur au moins une zone axiale.

10. Véhicule selon l'une des revendications 4 à 8, **caractérisé en ce que** la barre de fixation (H) est appuyée essentiellement sur toute sa longueur axiale contre le plafond (D).

11. Véhicule avec un dispositif de retenue selon l'une des revendications 1 à 3, **caractérisé en ce que** la barre de fixation (H) est un élément essentiellement d'un seul tenant.

12. Véhicule avec un dispositif de retenue selon l'une des revendications 1 à 3, **caractérisé en ce que** la barre de fixation (H) est un élément composé de plusieurs sections axiales.
